# EUROPEAN PATENT APPLICATION

(11) **EP 4 465 409 A1**
(43) Date of publication of application: **20.11.2024**
(21) Application number: 23173621.6
(22) Date of filing: 16.05.2023
(51) Int. Cl.: H01M 10/42, H01M 50/446, H01M 50/449, H01M 50/451, H01M 50/491, H01M 10/613, H01M 10/647, H01M 10/653, H01M 10/6555, H01M 10/658, H01M 50/103, H01M 50/105, H01M 50/209, H01M 50/211, H01M 50/289, H01M 50/593, H01M 50/291, H01M 50/293, H01M 10/0525

(54) **LAYERED PERFORATED CELL SEPARATOR TO MITIGATE THERMAL PROPAGATION**

(71) Applicant: VOLVO TRUCK CORPORATION, 405 08 Göteborg (SE)
(72) Inventor: Khoshab, Masih, 441 65 Alingsås (SE); Movaghar, Amirreza, 412 76 Göteborg (SE); Lebedeva, Svetlana, 435 37 Mölnlycke (SE)
(74) Representative: Valea AB

(57) **Abstract**

A multilayer cell separator (100) for mitigating thermal runaway between adjacent rechargeable battery cells (220) arranged in a stacked configuration (150), said multilayer cell separator (100) comprising a metal foil (110) sandwiched between at least a first and a second thermal insulation sheet (111,112), the at least first and second thermal insulation sheets (111,112) being provided with two or more through-holes (113). A battery energy storage system (300) provided with battery modules (200) comprising said battery stacks (150) is also provided.

## Description

### TECHNICAL FIELD

The disclosure relates to battery energy storage systems in electric vehicles. In particular aspects, the disclosure relates to layered perforated cell separator to mitigate thermal propagation in battery energy storage systems. The disclosure can be applied to heavy-duty vehicles, such as trucks, buses, and construction equipment, among other vehicle types. Although the disclosure may be described with respect to a particular vehicle, the disclosure is not restricted to any particular vehicle and may also be applied to stationary implementations.

### BACKGROUND

Electric vehicles are powered by electric battery packs, and their efficiency is directly dependent on the performance of the battery pack. Lithium-ion (Li-ion) batteries are widely used in the automotive industry due to their high energy and power density, low self-discharge rate, and extended lifecycle. However, the issue of range anxiety poses a significant obstacle in the mass adoption of electric vehicles. Therefore, researchers and electric vehicle companies are developing cathode and anode material combinations to increase the energy density of Li-ion batteries. To achieve this target, the cathode may have lithium-based nickel-rich or manganese-rich material, and the anode may be changed from pure carbon to a combination of silicone and carbon. However, such materials with higher energy densities have low thermal stabilities, which can lead to unfavorable issues such as thermal runaway.

Thermal runaway of Li-ion batteries is the phenomenon of exothermic chain reactions within the battery. These reactions usually produce a sharp increase in the internal battery temperature causing the inner structures of the battery to destabilize and degrade, which can lead to the total failure of the battery. Thermal runaway can occur from various forms of mechanical, electrical, and thermal abuse, which may lead to an internal short-circuit of the battery as the separator between the anode and the cathode either collapses, tears down, or is pierced. This generates a high amount of heat, which in turn intensifies the degree of electrochemical reactions causing excessive heat generation. This cycle continues, which may increase the temperature of the battery sharply and may release large amounts of flammable gases. The release of gases may cause an increase in the internal pressure of the battery resulting in the expansion of the outer casing.

### SUMMARY

According to a first aspect of the disclosure, there is provided a multilayer cell separator for mitigating thermal runaway between adjacent rechargeable battery cells arranged in a stacked configuration, said multilayer cell separator comprising a metal foil sandwiched between at least a first and a second thermal insulation sheet, the at least first and second thermal insulation sheets being provided with two or more through-holes.

The first aspect of the disclosure may seek to prevent, or at least delay the propagation of thermal runaway between rechargeable battery cells arranged in a stacked configuration. A technical benefit may include that by providing multilayer cell separators comprising at least two layers of thermal insulation sheets furnished with through-holes, the overall weight of the battery pack may be reduced without decreasing the resistance to thermal runaway. A further technical benefit of through-holes is that voids into which a thermal runaway battery is allowed to swell and expand are provided. Less restricted expansion may relieve some of the built-up pressure inside the battery casing.

Optionally in some examples, including in at least one preferred example, the at least first and second thermal insulation sheets are made from a thermal resistance material with a heat conductivity transfer coefficient of less than 0.35 W/mK. A technical benefit may include that materials having a low heat conductivity transfer coefficient are less prone to transfer heat from a battery cell experiencing thermal runaway to an adjacent cell.

Optionally in some examples, including in at least one preferred example, the at least first and second thermal insulation sheets are made from aerogel, mica, glass fiber, ceramic board, rock wool board, silica aerogel, graphite composite and/or a mixture thereof. A technical benefit may include that these materials have a low heat conductivity transfer coefficient and resist heat well.

Optionally in some examples, including in at least one preferred example, the at least first and second thermal insulation sheets have a melting temperature of at least 300° C, preferably of at least 500° C, still more preferably of at least 800° C, and yet still more preferably of at least 1000° C. A technical benefit may include that a material with high melting temperature will withstand heat for a longer time before being destroyed.

Optionally in some examples, including in at least one preferred example, the two or more through-holes have a rectangular, a circular, a triagonal, a polygonal outline, or a mixture thereof. A technical benefit may include that the shape of through-holes may be chosen depending on the type of battery cell and its potential swelling during thermal runaway.

Optionally in some examples, including in at least one preferred example, the metal foil has a heat reflectivity coefficient from about 0.10 to about 0.8, preferably from about 0.15 to about 0.7, preferably from about 0.2 to about 0.5. A technical benefit may include that a metal foil with high heat reflectivity is able to better resist transfer of heat to adjacent battery cells.

Optionally in some examples, including in at least one preferred example, the material of the metal foil is selected from the group consisting of stainless steel, aluminum, aluminum (Al), silver (Ag), gold (Au), and oxidized copper. A technical benefit may include that metal foils made from these materials can be made very thin and yet present heat reflectivity to prevent heat transfer to adjacent battery cells.

Optionally in some examples, including in at least one preferred example, the total thickness of the multilayer cell separator is from about 0.5 mm to about 5 mm, preferably from about 1.2 mm to about 3.5 mm, more preferably from about 1 mm to about 3 mm. A technical benefit may include that the thickness of the multilayer cell separator can be chosen so as to minimize the total weight of the battery pack while, based on the application, it still provides sufficient delay of spread of thermal runaway between battery cells.

Optionally in some examples, including in at least one preferred example, the total thickness of the metal foil is from about 0.01 mm to about 0.16 mm, preferably from about 0.04 mm to about 0.14 mm, more preferably from about 0.07 mm to about 0.12 mm. A technical benefit of providing thin metal foils may include a way of further decreasing the total weight and thickness of the multilayer cell separator.

Optionally in some examples, including in at least one preferred example, the total area of the through-holes makes up from about 10 to about 90 %, preferably from about 20 to about 80 %, preferably from about 30 to about 70 % of each the outer surface areas of the first and second thermal insulation sheets. A technical benefit may include that a reduced contact area between adjacent battery cells is provided, allowing more space for thermal runaway battery cells to expand.

Optionally in some examples, including in at least one preferred example, the multilayer cell separator has an edge surrounding the perimeter of the multilayer cell separator, a first cell separator outer surface and a second cell separator outer surface, the first and second cell separator surfaces comprising one or more grooves connecting the two or more through-holes to the edge of the multilayer cell separator. A technical benefit may include that any gas that may have leaked from a battery cell can be allowed to escape to the surroundings, preventing build-up inside the individual battery casing.

According to a second aspect of the disclosure, there is provided a battery module comprising
- a plurality of rechargeable battery cells connected in series or in parallel and arranged in a stacked configuration inside a housing forming the battery module, each rechargeable battery cell having two congruent and parallel stacking outer surfaces; and
- multilayer cell separators as described herein sandwiched between stacking outer surfaces of adjacent rechargeable battery cells.

The second aspect of the disclosure may seek to prevent, or at least delay the propagation of thermal runaway between rechargeable battery cells arranged in stacked configurations inside a battery module. A technical benefit may include that by providing multilayer cell separators comprising at least two layers of thermal insulation sheets furnished with through-holes, the overall weight of the battery module may be reduced without decreasing the resistance to thermal runaway. A further technical benefit of through-holes is that voids into which a thermal runaway battery is allowed to swell and expand are provided. Less restricted expansion may relieve some of the built-up pressure inside the battery casing.

Optionally in some examples, including in at least one preferred example, the rechargeable battery cell is a lithium-ion battery or a solid-state battery. A technical benefit may include that compared to other rechargeable battery technologies, Li-ion batteries have high energy densities, low self-discharge, and insignificant memory effect.

Optionally in some examples, including in at least one preferred example, the rechargeable battery cell is a prismatic battery cell or a pouch bag battery cell. A technical benefit may include that they are light, cost effective and can be easily stacked in a volume-saving manner.

According to a third aspect of the disclosure, there is provided a battery energy storage system comprising one or more battery modules as described herein, one or more temperature sensors; and a power controller system.

The third aspect of the disclosure may seek to prevent, or at least delay the propagation of thermal runaway between rechargeable battery cells arranged in stacked configurations inside a battery energy storage system. A technical benefit may include that by providing multilayer cell separators comprising at least two layers of thermal insulation sheets furnished with through-holes, the overall weight of the battery energy storage system may be reduced without decreasing the resistance to thermal runaway between adjacent battery cells. A further technical benefit of through-holes is that voids into which a thermal runaway battery is allowed to swell and expand are provided. Less restricted expansion may relieve some of the built-up pressure inside the battery casing.

According to a fourth aspect of the disclosure, there is provided a vehicle comprising the battery energy storage system as described herein.

The fourth aspect of the disclosure may seek to prevent, or at least delay the propagation of thermal runaway between rechargeable battery cells arranged in stacked configurations inside a battery energy storage system. A technical benefit may include that by providing multilayer cell separators comprising at least two layers of thermal insulation sheets furnished with through-holes, the overall weight of the vehicle may be reduced without decreasing the resistance to thermal runaway between adjacent battery cells. A further technical benefit of through-holes is that voids into which a thermal runaway battery is allowed to swell and expand are provided. Less restricted expansion may relieve some of the built-up pressure inside the battery casing.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary view of a battery stack according to one example.
**FIG. 2** is an exemplary view of a battery module according to one example.
**FIG. 3** is exemplary of an exploded view of a battery stack according to one example.
**FIG. 4A** is exemplary of an exploded view of a multilayer cell separator according to one example.
**FIG. 4B** is exemplary of a perspective view of a multilayer cell separator according to one example.
**FIGs. 5A-D** disclose different exemplary views of cell separators provided with differently shaped through-holes.
**FIG. 6A** is an exemplary view of a multilayer cell separator provided with grooves according to one example.
**FIG. 6B** is exemplary of a perspective view of a multilayer cell separator provided with grooves according to one example.

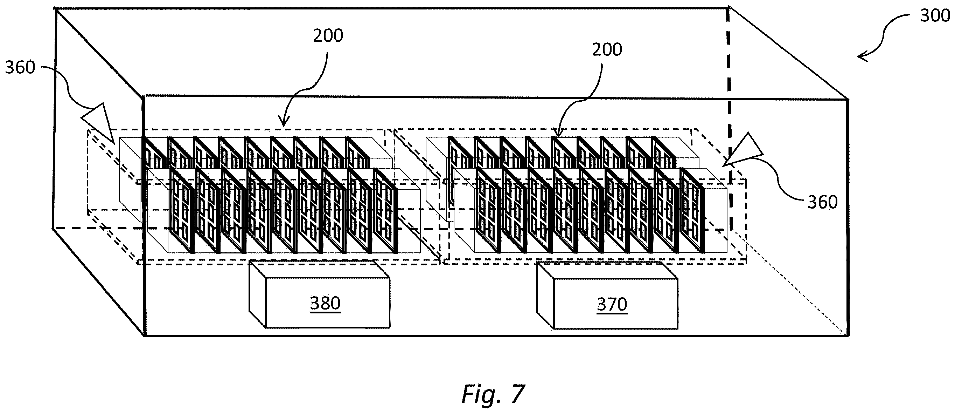

**FIG. 7** is exemplary of a perspective view of a battery energy storage system according to one example.
**FIG. 8** is exemplary of a schematic view of an experimental set-up according to one example.
**Fig. 9A** is an exemplary view of a plot showing the results of a first simulation experiment according to one example.
**Fig. 9B** is an exemplary view of a plot showing the results of a second simulation experiment according to one example.

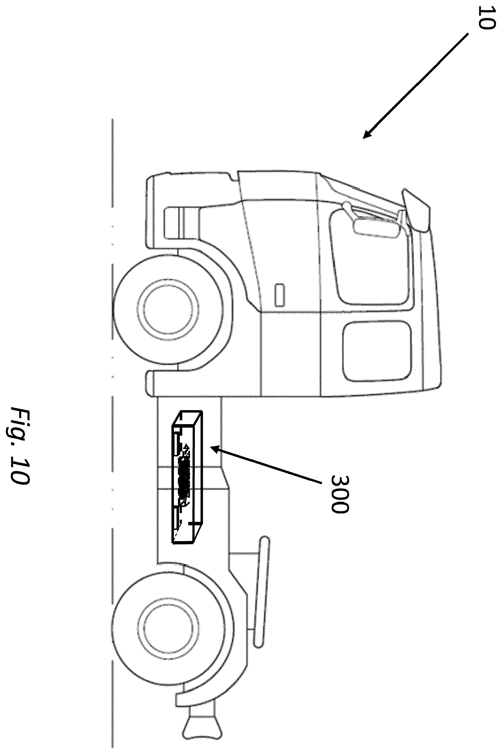

**FIG. 10** is an exemplary view of a vehicle comprising the battery energy storage system according to one example.

### DETAILED DESCRIPTION

The detailed description set forth below provides information and examples of the disclosed technology with sufficient detail to enable those skilled in the art to practice the disclosure.

In the following text, the terms "battery", "cell", "battery cell" and "rechargeable battery cell" may be used interchangeably and may refer to any of a variety of different cell chemistries and configurations as explained below.

The term "battery pack" as used herein refers to multiple individual batteries contained within a single piece or multi-piece housing, the individual batteries being electrically interconnected to achieve the desired voltage and capacity for a particular application.

It should be understood that identical element symbols used on multiple figures refer to the same component, or components of equal functionality. Additionally, the accompanying figures are only meant to illustrate, not limit, the scope of the invention and should not be considered to be drawn to scale.

Preventing thermal runaway in batteries, especially batteries that include a large plurality of electrochemical cells, is a difficult problem, as a cell adjacent to a cell experiencing a thermal runaway can absorb enough energy from the event to cause it to rise above its designed operating temperatures, triggering adjacent cells to also enter into thermal runaway. This propagation of an initiated thermal runaway event can result in a chain reaction in which cells enter into a cascading series of thermal runaways, as the cells ignite adjacent cells. In order to prevent such cascading thermal runaway events from occurring, a thermally insulating multilayer cell separator for delaying or preventing thermal runaway as disclosed herein is advantageously used.

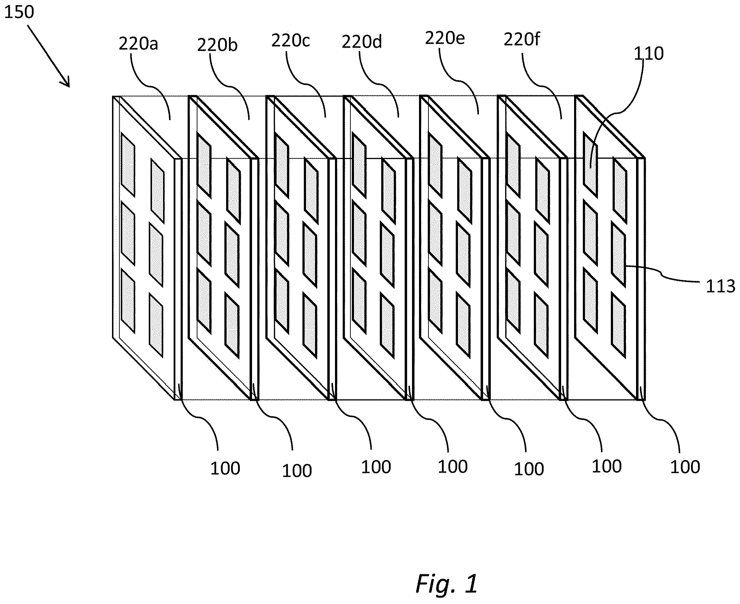

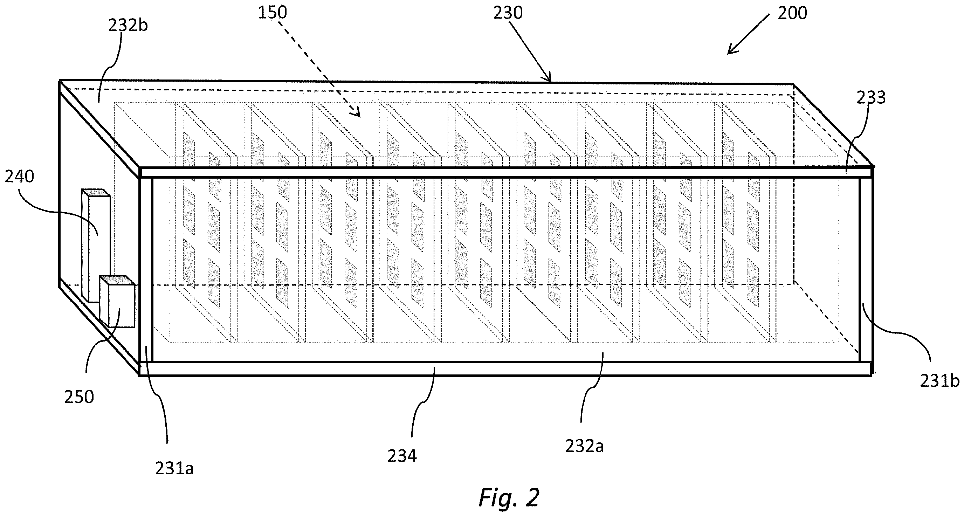

Fig. 1 is an exemplary view of a battery stack 150 wherein a plurality of rechargeable battery cells 210a-f connected in series or in parallel are arranged in a stacked configuration. The battery stack 150 is arranged inside a housing 230 forming a battery module 200 as seen in Fig. 2. It should be understood that while Figs. 1 and 2 only show a few battery cells 220, battery modules 200 may include battery stacks comprising as few as two cells, or as many as thousands of cells.

The rechargeable battery cells 220 may be lithium-ion batteries or solid-state lithium-metal batteries. In general, Li-ion battery cells consist of the anode, separator, cathode, an electrolyte, current collectors as well as a housing. The anode and cathode are made of active material coated on a thin metal foil. In the most common configuration, the anode consists of a copper foil coated with graphite and the cathode is an aluminum foil coated with LiNiₓCo_{y}Mn_{z}O₂. The separator, which is only permeable for Li ions, separates the anode from the cathode. In Li-ion batteries the electrolyte consists of a non-aqueous solvent and exists in the form of gel, while in solid-state Li batteries the electrolyte is solid in the form of glass, ceramic or other materials.

The two collectors form an electrical contact to the metal foils of the respective electrodes and are electrically insulated from each other. During charging, the Li ions flow from the cathode (metal oxide) through the separator to the anode (graphite) and form an intercalation compound with the graphite. During discharge, the reverse process occurs, and the electron flow takes place externally. These types of batteries are typically used in plug-in hybrid electric vehicles and battery electric vehicles.

The electrode material can be chosen from lithium cobalt oxide (LiCoO₂), lithium manganese oxide (LiMn₂O₄), lithium iron phosphate (LiFePO₄), lithium nickel manganese cobalt oxide (Li(Ni, Mn, Co)O₂), lithium nickel cobalt aluminum oxide (Li(Ni, Co, Al)O₂), lithium titanate (Li₄Ti₅O₁₂), lithium-ion polymer, and lithium-ion silicon. Amongst a variety of Li-ion chemical compositions, the most common compositions include LiMn₂O₄ (LMO), LiCoO² (LCO), and LiFePO₄ (LFP).

The rechargeable battery cells 220 may be prismatic cells or pouch cells. The prismatic battery cells have six faces which all have a rectangular shape and consist of a hard case (usually aluminum or stainless steel) in which an electrode coil is inserted. The hard case is then welded. In pouch cells, the electrode stack, which is mainly produced by z-folding or stacking, is enclosed by a form-unstable pouch foil. The foil is polyamide-aluminum-polypropylene compound, which is closed by a heat-sealing process. For both types, each type of battery cell has two congruent and parallel outer bases which form stacking surfaces 221,222.

The battery module housing 230 plays a decisive role in the functionality, safety and service life of the energy storage system. It shields the sensitive components from harmful environmental influences such as water, moisture and dust, and is crucial for a long-term, safe and reliable operation. The module housing 230 comprises first and second housing end plates 231a, 231b, first and second housing side plates 232a, 232b, a housing top plate 233 and a housing bottom plate 234.

Lithium-ion batteries can safely operate between -20 and +60 Celsius, but the optimal temperature range to maximize battery life is between 15 and 35° C. High current discharges will create internal heating within the cell, but a stable temperature environment maximizes the battery's life. Both low temperatures and high temperatures that are outside of this region may lead to degradation of performance and irreversible damage, such as lithium plating and thermal runaway. Thus, it is of uttermost importance that the temperature of battery cells 220 is maintained within these boundaries. Even a single cell's immature deterioration can reduce the performance and efficiency of the whole battery pack considerably.

During vehicle operation, considerable heat is generated in the battery stack 150 that needs to be rejected. Air cooling and liquid cooling are the most common methods of cooling battery packs 150. For air cooling, the battery cells 220 may be cooled directly with conditioned air. The required air can be tapped at different points in the vehicle, e.g., from a refrigerant-air evaporator. Active cooling via fluid coolants represents a very flexible and efficient cooling method. The fluid coolant may, e.g., flow through cooling channels (not shown) provided inside the housing plates 231a,b, 232a,b, 233, 234 and provide thermal regulation of the battery cells 220. Additionally, fluid cooling can also be differentiated into various variants regarding their spatial arrangements. The spatial arrangement is mainly based on the necessity of thermal contact with the battery cell 220 itself in order to cool every single cell 220. Herein, it can be separated into floor/head cooling, side cooling, cooling plates (fluid-led) and heat-conducted plates.

The battery module 200 advantageously also comprises a battery management system 240. The battery management system 240 manages the electronics of a rechargeable battery, whether a cell 220 or a battery pack, and is therefore a crucial factor in ensuring electric vehicle safety. It safeguards both the user and the battery by ensuring that the battery cell 220 operates within its safe operating parameters.

The design of the battery management system 240 may correspond to a large extent to the design of the battery. It consists of a battery monitoring integrated circuit (BMIC), a cell management controller (CMC) and a battery management controller (BMC).

The BMIC monitors the individual battery cells 220 and - may in a matter of microseconds - inform the CMC of the situation so that the CMC or BMC may react to, and, if necessary, correct an unfavorable situation. In order to prevent temperature leaks, the BMIC advantageously immediately notices the battery cell that is overheating and sends this information further on as quickly as possible. The BMC may decide how serious the situation is, how to proceed, and may shut down the overheated battery cell 220 if necessary. All of these events may happen at the same time. The battery management system 240 may also consists of circuits that will determine the state of charge, the state of health, balance the energy loads of different battery cells 220, and may record and communicate these parameters to other parts of the vehicle.

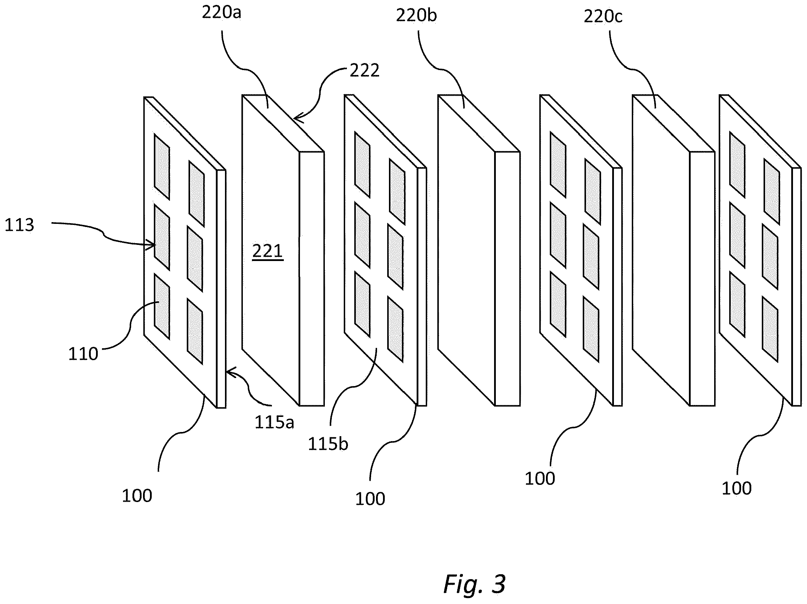

Despite preventive measures such as protective housing design and cooling to try to maintain stable temperatures, thermal runaway between battery cells 220 may still occur due to e.g., internal or external short circuits, overcharge, or multiple over-discharges followed by charge. Therefore, to further improve on protection against thermal runaway between rechargeable battery cells 220 when stacked inside housings 230, multilayer cell separators 100 are sandwiched between outer stacking surfaces 221,222 of adjacent rechargeable battery cells 220, as seen in Fig. 3 which is an exemplary exploded view of battery stack according to one example.

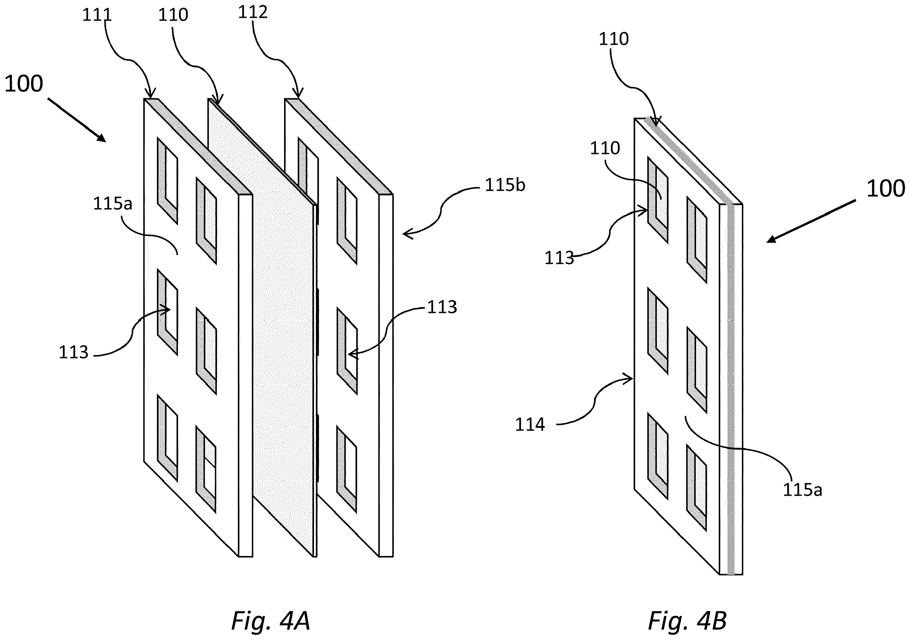

As can be seen in more detail in Figs. 4A and 4B, the multilayer cell separator 100 according to the present disclosure comprises a metal foil 110 sandwiched between at least a first and a second thermal insulation sheet 111,112, wherein the thermal insulation sheets 111,112 are provided with two or more through-holes 113. The multilayer cell separators 100 are configured to prevent or at least delay the spread of thermal runaway between battery cells 220.

In Fig. 1 it is seen that adjacent rechargeable battery cells 220 are stacked with multilayer cell separators 100 therebetween. Advantageously the multilayer cell separators 100 are arranged in a fixation frame (not shown) together with the battery cells 220 to form a battery stack 150. The fixation frame keeps the individual battery cells 220a-f in their foreseen place. However, individual battery cells 220 may also be glued to be kept in place. The battery stack is encased by a module housing and forms a battery module 200 as seen in Fig. 2

Fig. 1 illustrates a non-limiting example of the positioning of the multilayer cell separators 100 in between adjacent rechargeable battery cells 220 arranged in a stacked configuration. The multilayer cell separators 100 are approximately the same size as the height and width of the rechargeable battery cells 220. However, it is possible that the multilayer cell separators 100 may have a size that is slightly smaller or larger than the rechargeable battery cells 220.

Regardless of their configuration, the thermal insulation sheets 111,112 on either side of the metal foil 110 are advantageously manufactured from a material that is capable of withstanding the temperatures associated with thermal runaway without melting, vaporizing or deforming. This will ensure that in the event of a thermal runaway the affected battery cell 220 remains intact long enough to allow passengers to safely exit the vehicle.

Preferably the thermal insulation sheets 111,112 have a melting temperature of at least 300° C., more preferably of at least 500° C., still more preferably of at least 800° C., and yet still more preferably of at least 1000° C. Preferably the material selected for the multilayer cell separators 100 have a relatively low mass, thus minimizing its contribution to overall battery pack mass. The selected material should also have a relatively low coefficient of thermal conductivity, thus ensuring that it does not effectively transfer thermal energy from the affected cell to the neighboring cells 220. Additionally, the selected material should be electrically insulating.

The thermally insulating multilayer cell separator 100 configured for delaying or preventing thermal runaway can be directly placed on or adhered to the exterior surface of the rechargeable battery cell 220, for example, on the exterior surface of a pouch cell or prismatic cell. The thermally insulating multilayer cell separator 100 can be attached to the battery cell 220 by an adhesive layer.

Examples of materials that may be used as thermal insulation sheets 111, 112 may include glass fiber, ceramic board, rock wool board, silica aerogel, graphite composite, or a combination thereof. Advantageously the thermal insulation sheets 111,112 are manufactured from aerogel, microspheres, mica or a combination thereof.

An aerogel is an open-celled solid matrix including a network of interconnected nanostructures with a porosity of greater than 50 vol%, more preferably greater than 90 vol%, and can be derived from a gel by replacing the liquid component in the gel with a gas, or by drying a wet gel, such as by supercritical drying. Exemplary aerogels for use in the thermal insulation layer include polymer aerogels such as poly(vinyl alcohol), polyurethane, polyimide, resorcinol-formaldehyde polymers, polyisocyanate, epoxy, and polyacrylamide aerogels; polysaccharide aerogels including chitin and chitosan aerogels; and inorganic aerogels, for example carbon (e.g., graphene) aerogels, ceramic aerogels (e.g., boron nitride aerogels), and metal oxide and metalloid oxide aerogels (e.g., aluminum oxide, vanadium oxide, and silica aerogels). A combination of the foregoing materials can be used.

Exemplary microspheres include cenospheres, glass microspheres, for example borosilicate microspheres, or a combination thereof. Advantageously they may be hollow or coated.

Mica is stable when exposed to electricity, light, moisture, and extreme temperatures. For example, phlogopite mica can maintain its structural integrity up to 1200°C and muscovite mica can maintain structural integrity up to 1000°C.

The multilayer cell separator 100 can have a total thickness of about 0.5 mm to about 5 mm, preferably from about 1 mm to about 3 mm, more preferably from about 1 mm to about 2 mm, but this depends on the application. Adding thicker cell separators increases safety by reducing the thermal propagation probability. However, increasing thickness may at the same time reduce the overall energy density of the battery pack.

The thermal conductivity is dependent on the shape and structure of the layers, but advantageously, thermal insulation sheets having a low thermal conductivity (TC) are chosen such that the multilayer cell separator 100 has an overall thermal conductivity (TC) of less than 0.35 watts per meter Kelvin (W/m x K) , such as from about 0.05 to about 0.32 W/m K, preferably from about 0.1 to about 0.27 W/m K to delay thermal runaway.

The weight of the battery stacks 150 makes up a considerable part of the total weight of the vehicle, and therefore it is an important aspect of the multilayer cell separator 220 disclosed herein to minimize the weight of each item included in the battery stack 150. To achieve this goal the first and second thermal insulation sheets 111,112 are provided with two or more through-holes 113.

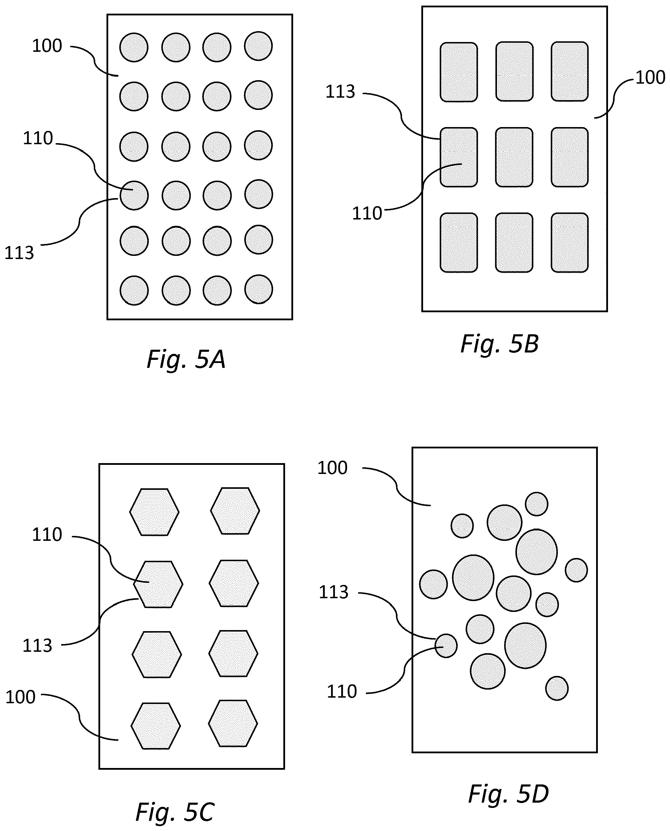

Figures 5a-5c disclose different examples of multilayer cell separators 100, and as seen the two or more through-holes 113 may have rectangular, circular, or polygonal outlines, or a mixture thereof (not shown). The thermal insulation sheets 111,112 may also be provided with through-holes 113 of different sizes, which are unevenly distributed throughout the surface area of the multilayer cell separator 100 (Fig. 5d). The at least first and second thermal insulation sheets 111,112 on each side of the metal foil 110 are identical for a given multilayer cell separator 100. This means that the through-holes 113 of the first thermal insulation sheet 111 have an identical configuration and arrangement as the through-holes 113 on the second thermal insulation sheet 112.

During cell failure, such as a thermal runaway, gases are produced as a result of thermal decomposition of the electrolyte components. This gas generation results in an increase in pressure within the battery cell 220, which may lead to expansion of the physical dimensions of the cell 220 through swelling and can ultimately result in cell rupture with the venting of gases and possibly flame. A battery cell 220 undergoing thermal runaway will expand and strongly press onto the cell separator 100.

The arrangement with through-holes 113 in the multilayer cell separator 100 provides a reduced contact area that will protect against heat radiation transfer between adjacent battery cells 220. However, the reduction in contact area provides a void into which a thermal runaway battery is allowed to swell and expand. This way some of the built-up pressure inside the battery casing is relieved.

To reduce heat-transfer through the multilayer cell separator 100 during a thermal runaway event, a material with a high reflection coefficient and a high melting point such as e.g., thin metal foil 110 is provided between the first and second thermal insulation sheets 11,112. This will limit heat radiating from a hot cell to a cold cell despite the through-holes 113.

Advantageously, the metal foil 110 has a heat reflectivity coefficient of from about 0.1 to about 0.8, preferably from about 0.15 to about 0.7, more preferably from about 0.2 to about 0.5.

The material of the metal foil 110 is advantageously selected from the group consisting of stainless steel, aluminum (Al), silver (Ag), gold (Au), or oxidized copper. However, it is contemplated that also mica coated with thin layers of metal may be provided between the first and second thermal insulation sheets 111,112.

The total thickness of the metal foil 110 is advantageously as thin as possible from about 0.01 mm to about 0.16 mm, preferably from about 0.04 mm to about 0.14 mm, more preferably from about 0.07 mm to about 0.12 mm.

The multilayer cell separators 100 act both as thermal and mechanical barriers between adjacent battery cells 220, and the arrangement of through-holes 113 in the thermal insulation sheets 111,112 means that the total area of the multilayer cell separator 100 facing each battery cell is reduced. As a consequence, the mechanical behavior of the cell separator 100 has also changed since a reduced amount of material leads to an overall reduction in cell separator 100 stiffness. In a battery module 200 with many battery cells 202, the stacking pattern of cell separators 100 between battery cells 202 can be viewed as a resilient system wherein a change in cell separator stiffness, e.g., by increasing the total area of through-holes 113, may reduce its rigidity and thereby increase its ability to accommodate a lateral swelling of individual battery cells 220. As a consequence, the final expanding force to impact the battery module 200 during thermal runaway will also be reduced. Thus, parameters such as material, stiffness, thickness, and perforated area for the multilayer cell separator 100 must be carefully chosen to accommodate this swelling of the battery cells 220.

This may also include the placement of through-hoes 113 in the thermal insulation sheets. Fig. 5d discloses an example of a multilayer cell separator 100 wherein through-holes 113 with larger areas are advantageously arranged towards the middle of the cell separator 100, while through-holes 113 with smaller areas are located towards the edges. This may be an advantageous arrangement of the through-holes 113 since a battery cell tends to swell more in the mid-section than around the edges.

Advantageously, the total area of the through-holes 113 makes up from 10-90 %, preferably 20-80%, more preferably 30-70% of each the outer surface areas 115a,115b of the first and second thermal insulation sheets 111, 112 on the multilayer cell separator 100.

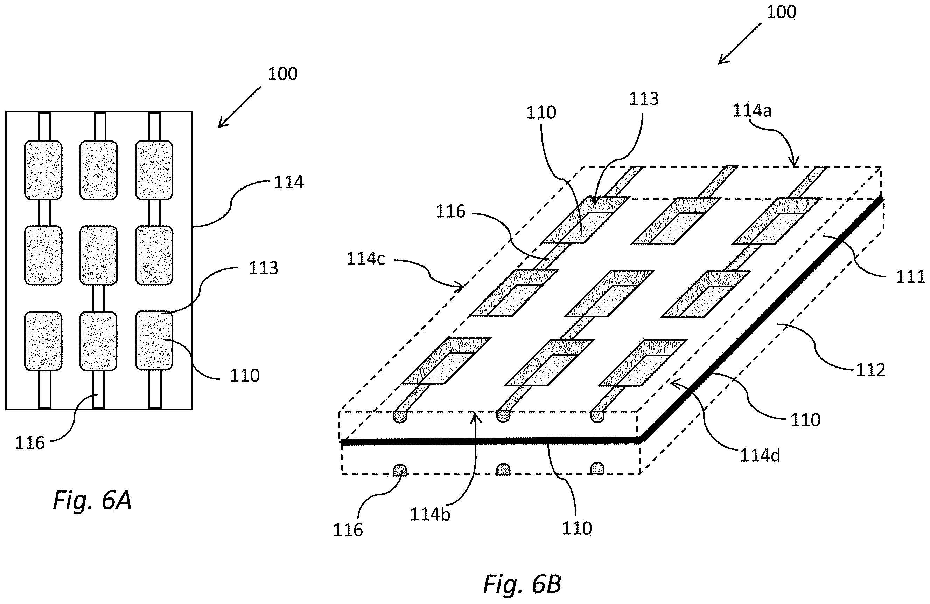

In a further example, the outer surfaces 115a, 115b of the thermal insulation sheets 111,112 may be provided with one or more grooves 116 which connect the two or more through-holes 113 to a surrounding edge 114 of the multilayer cell separator 100 as seen in Figs. 6A and 6B. Connecting the through-holes 113 to one or more, or all of the top, bottom or side edges 114 a,1 14b,1 14c,1 14d of the multilayer cell separator 100 may allow any gas that has leaked from a perforated battery casing to escape from the battery cell 220. The grooves 116 may connect through-holes 113 to all edges 114 a,1 14b,114c,114d of the multilayer cell separator 100 facing the housing bottom plate 234, top plate 233 and/or side plates 232a,232b of the housing 230. The bottom plate 234, top plate 233 and side plates 232a,232b advantageously contain means such as channels or safety valves (not shown) for removing such gases away from the battery module 200.

### EXAMPLE

A simulation experiment was performed to illustrate the difference in heat transfer between battery cells 220 separated by a multilayer cell separator 100 provided with through-holes 113 compared to a conventional multilayer cell spacer without through-holes 113.

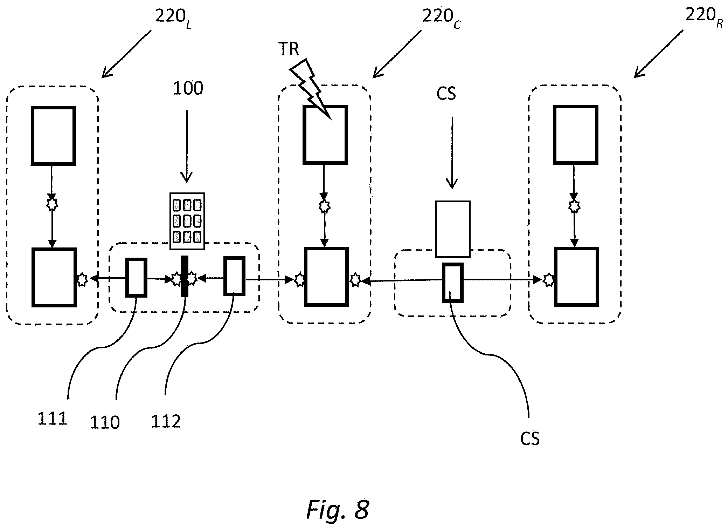

The set-up of the experiment is illustrated in Fig. 8 and is as follows:
A central battery cell 220c in the form of a jelly roll is placed between two adjacent battery cells 220*_{L}* and 220*_{R}* (also jelly rolls) which are identical. The jelly rolls are inserted in casings. On the left side, a multilayer cell separator 100 in accordance with the disclosure herein is arranged between the left battery cell 220*_{L}* and the central battery cell 220c. The multilayer cell separator 100 comprises a stainless-steel foil 110 having a thickness of 0.1 mm sandwiched between two mica thermal isolation sheets 111,112 provided with rectangular shaped through-holes 113. The multilayer cell separator 100 had a total thickness of about 1.4 mm.

On the right, a conventional mica cell separator CS with a total thickness of 1.4 mm without through-holes is arranged between the right battery cell 220*_{R}* and the central battery cell 220c. The central battery cell 220c is allowed to enter thermal runaway mode TR, and the heat transferred from the central cell 220c to either of the left and right cells 220*_{L}*, 220*_{R}* is measured at different measuring points marked as ∗ as shown in Fig. 8.

It is assumed that the central battery cell 220c enters into thermal runaway TR at T=120°C. Furthermore, it is assumed that the thermal runaway in the central battery cell 220c occurs at t=10s.

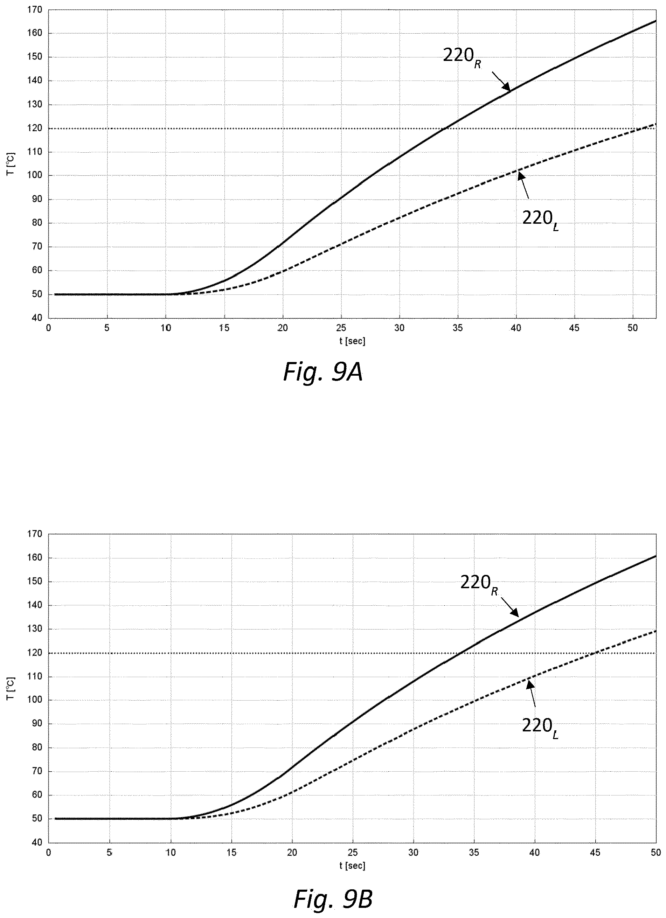

In a first simulation, the through-holes 113 of the multilayer cell separator 100 cover about 37% of the total contact area between the left battery cell 220*_{L}* and the central cell 220c. Fig. 9A is a plot wherein it is seen that the right battery cell 220*_{R}* shielded by a cell separator CS without through-holes 113 reaches 120°C in 37s, while the left battery cell 220*_{L}* shielded with the multilayer cell separator 100 in accordance with the disclosure herein and comprising through-holes 113 covering 37% of the contact area to the central cell 220c, requires 45s to reach the thermal runaway temperature 120°C. Thus a 37% reduction in contact area between adjacent battery cells prolongs the delay to reach thermal runaway in an adjacent battery cell with about 46%.

In a second simulation, the through-holes 113 of the multilayer cell separator 100 cover about 50% of the total contact area between the left battery cell 220*_{L}* and the central battery cell 220c. Fig. 9B is a plot wherein it is seen that the right battery cell 220*_{R}* shielded by a cell separator CS without through-holes 113 reaches 120°C in 34s, while the left battery cell 220*_{L}* shielded with the multilayer cell separator !00 comprising through-holes 113 covering about 50% of the contact area to the central cell 220c requires 51s to reach the thermal runaway temperature 120°C. Thus a 50% reduction in contact area between adjacent battery cells 220*_{L}*, 220c prolongs the delay to reach thermal runaway in an adjacent cell with about 71%.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

Example 1: A multilayer cell separator (100) for mitigating thermal runaway between adjacent rechargeable battery cells (220) arranged in a stacked configuration (150), said multilayer cell separator (100) comprising a metal foil (110) sandwiched between at least a first and a second thermal insulation sheet (111,112), the at least first and second thermal insulation sheets (111,112) being provided with two or more through-holes (113).

Example 2: The multilayer cell separator (100) of example 1, wherein the at least first and second thermal insulation sheets (111,112) are made from a thermal resistance material with a heat conductivity transfer coefficient of less than 0.35 W/mK.

Example 3: The multilayer cell separator (100) according to any one of the preceding examples, wherein the at least first and second thermal insulation sheets (111,112) are made from aerogel, mica, glass fiber, ceramic board, rock wool board, silica aerogel, graphite composite and/or a mixture thereof.

Example 4: The multilayer cell separator (100) according to any one of the preceding examples, wherein the at least first and second thermal insulation sheets (111,112) have a melting temperature of at least 300° C, more preferably of at least 500° C, still more preferably of at least 800° C, and yet still more preferably of at least 1000° C.

Example 5: The multilayer cell separator (100) according to any one of the preceding claims, wherein the two or more through-holes (113) have a rectangular, a circular, a triagonal, a polygonal outline, or a mixture thereof.

Example 6: The multilayer cell separator (100) according to any one of the preceding examples, wherein the metal foil (110) has a heat reflectivity coefficient from about 0.10 to about 0.8, preferably from about 0.15 to about 0.7, more preferably from about 0.2 to about 0.5.

Example 7: The multilayer cell separator (100) according to any one of the preceding examples, wherein the material of the metal foil (110) is selected from the group consisting of stainless steel, aluminum (Al), silver (Ag), gold (Au), and oxidized copper.

Example 8: The multilayer cell separator (100) according to any one of the preceding examples, wherein the total thickness of the multilayer cell separator (100) is from about 0.5 mm to about 5 mm, preferably from about 1.2 mm to about 3.5 mm, more preferably from about 1 mm to about 3 mm.

Example 9: The multilayer cell separator (100) according to any one of the preceding examples, wherein the total thickness of the metal foil (110) is from about 0.01 mm to about 0.16 mm, preferably from about 0.04 mm to about 0.14 mm, more preferably from about 0.07 mm to about 0.12 mm.

Example 10: The multilayer cell separator (100) according to any one of the preceding examples, wherein the total area of the through-holes (113) makes up from about 10 to about 90 %, preferably from about 20 to about 80 %, more preferably from about 30 to about 70 % of each the outer surface areas (115a,115b) of the first and second thermal insulation sheets (111, 112).

Example 11: The multilayer cell separator (100) according to any one of the preceding examples, wherein the multilayer cell separator (100) has an edge (114) surrounding the perimeter of the multilayer cell separator (100), a first cell separator outer surface (115a) and a second cell separator outer surface (115b), the first and second cell separator surfaces (115a,115b) comprising one or more grooves (116) connecting the two or more through-holes (113) to the edge (114) of the multilayer cell separator (100).

Example 12: The multilayer cell separator (100) according to example 11, wherein the surrounding edge (114) of the multilayer cell separator (100) has a top edge (114a), a bottom edge (114b) and a first and second side edge (114c, 114d) respectively, and wherein the one or more groves (116) connect the two or more through-holes (113) to the first or second side edges (114c,114d) of the multilayer cell separator (100).

Example 13: A battery module (200) comprising
- a plurality of rechargeable battery cells (220) connected in series or in parallel and arranged in a stacked configuration inside a housing (230) forming the battery module (200), each rechargeable battery cell (220a, 220b) having two congruent and parallel stacking outer surfaces (221,222); and
- multilayer cell separators (100) according to any one of examples 1-12 sandwiched between stacking outer surfaces (221,222) of adjacent rechargeable battery cells (220a, 220b).

Example 14: The battery module (200) according to example 13, wherein the rechargeable battery cell (220) is a lithium-ion battery or a solid-state battery.

Example 15: The battery module (200) according to example 14, wherein the rechargeable battery cell (220) is a prismatic battery cell or a pouch bag battery cell.

Example 16: The battery module (200) according to any one of the preceding examples 13-15, wherein the housing (230) comprises first and second housing end plates (231a,231b), first and second housing side plates (232a,232b), a housing top plate (233) and a housing bottom plate (234).

Example 17: The battery module (200) according to any one of the preceding examples 13-16, wherein the multilayer cell separator (100) has an edge (114) surrounding the perimeter of the multilayer cell separator (100), a first cell separator surface (115a) facing the outer stacking surface (221) on a first battery cell (220a) and a second cell separator surface (115b) facing the outer stacking surface (222) on an adjacent second battery cell (220b), the first and second cell separator surfaces (115a, 115b) comprising one or more grooves (116) connecting the two or more through-holes (113) to the edge (114) of the multilayer cell separator (100).

Example 18: The battery module (200) according to example 17, wherein the surrounding edge (114) of the multilayer cell separator (100) has a top edge (114a) facing the housing top plate (233), a bottom edge facing (114b) the housing bottom plate (234) and a first and second side edge (114c,114d) facing the first and second housing side plates (232a,232b) respectively, and wherein the one or more groves (116) connect the two or more through-holes (113) to the first or second side edges (114c,114d) of the multilayer cell separator (100).

Example 19: The battery module (200) according to examples 17 and 18, wherein the surrounding edge (114) of the multilayer cell separator (100) has a top edge (114a) facing the housing top plate (233), a bottom edge facing (114b) the housing bottom plate (234) and a first and second side edge (114c,114d) facing the first and second housing side plates (232a,232b) respectively, and wherein the one or more groves (116) connect the two or more through-holes (113) to the top edge (114a) of the multilayer cell separator (100).

Example 20: The battery module (200) according to examples 18 -19, wherein the one or more groves (116) connect the two or more through-holes (113) to the first or second side edges (114c,114d) and to the top edge (114a) of the multilayer cell separator (100).

Example 21: A battery energy storage system (300) comprising
- one or more battery modules (200) according to examples 13-20
- one or more temperature sensors (360); and
- a power controller system (370).

Example 22: A vehicle (10) comprising the battery energy storage system (300) of example 21.

## Claims

1. A multilayer cell separator (100) for mitigating thermal runaway between adjacent rechargeable battery cells (220) arranged in a stacked configuration (150), said multilayer cell separator (100) comprising a metal foil (110) sandwiched between at least a first and a second thermal insulation sheet (111,112), the at least first and second thermal insulation sheets (111,112) being provided with two or more through-holes (113).

2. The multilayer cell separator (100) according to claim 1, wherein the at least first and second thermal insulation sheets (111,112) are made from a thermal resistance material with a heat conductivity transfer coefficient of less than 0.35 W/mK.

3. The multilayer cell separator (100) according to any one of the preceding claims, wherein the at least first and second thermal insulation sheets (111,112) are made from aerogel, mica, glass fiber, ceramic board, rock wool board, silica aerogel, graphite composite and/or a mixture thereof, and have a melting temperature of at least 300° C, more preferably of at least 500° C, still more preferably of at least 800° C, and yet still more preferably of at least 1000° C.

4. The multilayer cell separator (100) according to any one of the preceding claims, wherein the two or more through-holes (113) have a rectangular, a circular, a triagonal, a polygonal outline, or a mixture thereof.

5. The multilayer cell separator (100) according to any one of the preceding claims, wherein the metal foil (110) has a heat reflectivity coefficient from about 0.10 to about 0.8, preferably from about 0.15 to about 0.7, more preferably from about 0.2 to about 0.5.

6. The multilayer cell separator (100) according to any one of the preceding claims, wherein the material of the metal foil (110) is selected from the group consisting of stainless steel, , aluminum (Al), silver (Ag), gold (Au), and oxidized copper.

7. The multilayer cell separator (100) according to any one of the preceding claims, wherein the total thickness of the multilayer cell separator (100) is from about 0.5 mm to about 5 mm, preferably from about 1.2 mm to about 3.5 mm, more preferably from about 1 mm to about 3 mm.

8. The multilayer cell separator (100) according to any one of the preceding claims, wherein the total thickness of the metal foil (110) is from about 0.01 mm to about 0.16 mm, preferably from about 0.04 mm to about 0.14 mm, more preferably from about 0.07 mm to about 0.12 mm.

9. The multilayer cell separator (100) according to any one of the preceding claims, wherein the total area of the through-holes (113) makes up from about 10 to about 90 %, preferably from about 20 to about 80 %, more preferably from about 30 to about 70 % of each the outer surface areas (115a,115b) of the first and second thermal insulation sheets (111, 112).

10. The multilayer cell separator (100) according to any one of the preceding claims, wherein the multilayer cell separator (100) has an edge (114) surrounding the perimeter of the multilayer cell separator (100), a first cell separator outer surface (115a) and a second cell separator outer surface (115b), the first and second cell separator surfaces (115a, 115b) comprising one or more grooves (116) connecting the two or more through-holes (113) to the edge (114) of the multilayer cell separator (100).

11. A battery module (200) comprising
- a plurality of rechargeable battery cells (220) connected in series or in parallel and arranged in a stacked configuration inside a housing (230) forming the battery module (200), each rechargeable battery cell (220a, 220b) having two congruent and parallel stacking outer surfaces (221,222); and
- multilayer cell separators (100) according to any one of claims 1-10 sandwiched between stacking outer surfaces (221,222) of adjacent rechargeable battery cells (220a, 220b).

12. The battery module (200) according to claim 11, wherein the rechargeable battery cell (220) is a lithium-ion battery or a solid-state battery.

13. The battery module (200) according to claim 12, wherein the rechargeable battery cell (220) is a prismatic battery cell or a pouch bag battery cell.

14. A battery energy storage system (300) comprising
- one or more battery modules (200) according to claims 11-13
- one or more temperature sensors (360); and
- a power controller system (370).

15. A vehicle (10) comprising the battery energy storage system (300) of claim 14.
